# EUROPEAN PATENT APPLICATION

(11) **EP 4 776 264 A2**
(43) Date of publication of application: **15.07.2026**
(21) Application number: 26181828.0
(22) Date of filing: 10.08.2023
(51) Int. Cl.: G09B 15/00

(54) **VIRTUAL, AUGMENTED OR MIXED REALITY INSTRUMENT TEACHING SYSTEM AND METHOD**

(30) Priority: 11.08.2022 US 202263396964 P; 24.03.2023 US 202318125746
(62) Divisional of application: 23190904.5
(71) Applicant: Simply Ltd, 6701457 Tel Aviv (IL)
(72) Inventor: Aharonson, Eran, 6701457 Tel Aviv (IL); Malka, Maayan, 6701457 Tel Aviv (IL); Agami, Oren, 6701457 Tel Aviv (IL); Wodnizki, Omer, 6701457 Tel Aviv (IL); Peled, Gil Jacob, 6701457 Tel Aviv (IL); Zewi, Oded, 6701457 Tel Aviv (IL); Kaminka, Yuval, 6701457 Tel Aviv (IL)
(74) Representative: IPrime Rentsch Kaelin AG

(57) **Abstract**

Aspects of embodiments pertain to systems and methods for providing a user with information relating to the playing of a musical instrument. The systems and methods comprise presenting the user with instrument playing instructions to be executed by at least one user; identifying, of the at least one user, at least one object expected to operably engage with the musical instrument for executing the instrument playing instructions; tracking movement of the identified at least one object; and displaying to the user at least one assistive symbol at least partly in correspondence with the presented instrument playing instructions.

## Description

### CROSS-REFERENCE TO RELATED APPLICATIONS

This application claims priority and/or benefit from US Provisional patent application 63/396,964, filed August 11, 2022, titled "VIRTUAL OR AUGMENTED REALITY INSTRUMENT TEACHING SYSTEM", and from US non-provisional application 18/125,746, filed 24 March 2023, titled "VIRTUAL OR AUGMENTED REALITY INSTRUMENT TEACHING SYSTEM", both of which are incorporated herein by reference in their entirety.

### TECHNICAL FIELD

The present disclosure relates to a method and system for providing a user with instructions on how and/or what to play with an instrument, using a virtual or augmented reality display interface.

### BACKGROUND

A user may play an instrument in accordance with musical notations presented to him. The musical notations may represent a musical piece to be performed by the user or an exercise for learning to play an instrument. The musical notation may be presented to the user using printed sheet music or digital sheet music. Digital sheet music (i.e., musical notations displayed on or by a digital / computerized medium) usually has a scrolling and note following function where the scrolling is either done manually or the music is scrolled at a constant speed (metronome-based).

### BRIEF DESCRIPTION OF THE DRAWINGS

The figures illustrate generally, by way of example, but not by way of limitation, various embodiments discussed in the present document.

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. References to previously presented elements are implied without necessarily further citing the drawing or description in which they appear. The number of elements shown in the Figures should by no means be construed as limiting and is for illustrative purposes only. The figures are listed below.
**FIG. 1** is a flow-chart of a method for providing the user with information relating to the operable engagement with an instrument, according to some embodiments.
**FIG. 2** is a schematic illustration of displaying a plurality of assistive symbols in overlay with human body parts operably engaging with a musical instrument, according to some embodiments.
**FIG. 3** is a schematic illustration of displaying a virtual assistive body party for accompanying a user playing a musical instrument, according to some embodiments.
**FIG. 4** is schematic illustration of a virtual audience displayed to the user, according to some embodiments.
**FIG. 5A** is a flowchart illustration of a method for providing the user with information relating to the operable engagement with an instrument, according to some embodiments.
**FIG. 5B** is a continuation of the flowchart shown in **FIG. 5A****,** according to some embodiments.
**FIGs. 6A** and **6B** are schematic illustrations of a transition of a user's body part between two distinct positions, according to some embodiments.
**FIGs. 7A** and **7B** are schematic diagram illustrations of an extended reality music teaching system, according to some embodiments.

### DETAILED DESCRIPTION

Aspects of the present invention pertain to a computerized device, system and method for providing the user with an interactive teaching app for learning to play an instrument, learning singing and/or for teaching . The device, system and method may be configured to display to the user, in a virtual reality (VR), augmented reality (AR) or mixed reality (MR) environment, with information such as at least one assistive (e.g., animated) symbol, in relation to the playing of a musical instrument by the user, for example, to implement a virtual or augmented or mixed reality instrument teaching system and/or method. VR, AR and MR display modalities may herein collectively be referred to as "extended reality", and abbreviated as "XR". The displayed animation may correspond to the movement to be performed by the player.

The information is displayed to the user using a computerized application executed by the computerized device of the system.

In some examples, the musical instrument is a real-world instrument and in some other examples, the musical instrument may be a virtual object representing a real-world instrument, or a combination of real-world and virtual instrument.

In some embodiments, the system may be configured to present a user with instrument playing instructions to be executed by the user. Such instrument playing instructions may include, for example, musical notations and/or sound cues and/or visual cues, e.g., for training a user to play an instrument by hearing. The system may further be configured to identify, of the at least one user, at least one object that is supposed or expected to operably engage with the musical instrument for executing the instrument playing instructions. The at least one object may include, for example, one or more human body parts (e.g., hands, fingers, legs) and/or a mallet (e.g.,. drumstick, pick, xylophone stick).

In some examples, the system may be configured to capture and track the movement of the at least one object and, in addition, determine a position and timing of operable engagement of the at least one object with the musical instrument.

The system may further display the user at least one assistive symbol, at least partly in correspondence with the received instrument playing instructions.

Displaying the assistive symbol at least partly in correspondence with the received musical instructions may include, for example, displaying a virtual operational engagement of the assistive symbol with the musical instrument for providing an animated representation of desired operable engagement in accordance with the playing instructions. The assistive symbol may be provided continuously for the entirety of the playing instructions, or only for parts of the playing instructions, e.g., depending on a determined level of command of playing the musical instrument. In some examples, type of assistive symbols displayed by the system and/or timing and/or rate at which assistive symbols are displayed to the user may depend, for example, on the user's playing level, e.g., as determined by the user, and/or based on the type and/or level of difficulty of the musical instructions presented to the user.

In some embodiments, the assistive symbol may guide the user when and/or how to operably engage with a musical instrument, provide transition instructions (e.g., fingering instructions, arrows, a virtual body part, a geometric symbol, color-based indications, etc.) for assisting or guiding a user how to transition from a first position of operable engagement to a subsequent position of operable engagement with the musical instrument, display a virtual operable accompanying engagement for accompanying the user playing the musical instrument; and/or complement a detected missed user engagement with the musical instrument.

In some examples, the at least one assistive symbol may be displayed to the user based on detected operable engagement of the at least one object with the musical instrument. In some other examples, the at least one assistive symbol may be displayed to the user independent of detected operable engagements made by the at least one object with the musical instrument.

In some examples, the at least one assistive symbol may be displayed to the user in accordance with the received musical instructions. In some examples, the at least one assistive symbol may be displayed to the user based on detected operable engagement of the at least one object with the musical instrument and further based on the received instrument playing instructions.

The at least one assistive symbol may be displayed in a virtual environment, mixed environment or in an augmented environment, for example, in juxtaposition and/or in overlay with the at least one object. In one example implementation, the at least one object is a real-world object (e.g., body part and/or mallet) viewable by the user via a see-through display, or a virtual representation of the object.

In some embodiments, the at least one assistive symbol can represent one or more of the following: a virtual assisting object which may, for example, virtually operably engage with the musical instrument; a guidance symbol (e.g., a marker) for providing the user with feedback and/or guidance on how to execute the received instrument playing instructions. Guidance may be provided in a static and/or in an animated manner, e.g., as an animated arrow, and/or animated virtual body part. Guidance provided to the user may indicate which body parts to move, and/or which body parts to keep stationary, e.g., relative to other body parts to be moved and/or relative to keys of a piano and/or any other object.

In some embodiments, the assistive symbol is displayed in overlay with a corresponding at least one object to guide the user how to operably engage with the musical instrument and/or to provide the user with an indication whether a detected operable engagement of the at least one object with the musical instrument corresponds with the provided instrument playing instructions or not. For example, a green symbol displayed in overlay with a user's finger provides an indication that the user's finger correctly engages with the musical instrument (e.g., with a key of a keyboard instrument, or with a string of a string instrument), whereas a red symbol displayed in overlay with the finger provides an indication that the user's finger does not engage in accordance with the musical instructions presented to the user.

In some embodiments, the system may be configured to track movement of the object and detect an operable engagement (or lack thereof) of the at least one object with the musical instrument. The system may further be configured to determine a level of correspondence between the operable engagement of the at least one object and the playing instructions. The system may then display the assistive symbol in accordance with the determined level of correspondence.

In some embodiments, the system may be configured to assist the user in playing a musical instrument by presenting or displaying to the user virtual body parts, in accordance with the user's actionable engagement with the musical instrument. The assistance can be for example in the form of presenting virtual fingers, virtual left hand playing while the user plays with the right hand, etc. In some examples, the system may further be configured to determine, based on the user's performance level, a level of assistance to be displayed to the user, e.g., to complement the user's actionable engagement with the musical instrument. This may for example be accomplished by displaying to the user assistive virtual body parts, simultaneously with, or intermittently between two consecutive operable engagements of the at least one object with the musical instrument.

In some examples, a mismatch event may be detected when the level of correspondence does not meet a performance success criterion for playing the musical instrument. In such case, the system may display an assistive symbol for providing the user with guidance on how to engage with the musical instrument to prevent recurrence of the mismatch event.

In some embodiments, the system may output a sound output in timed coordination and in accordance with the displayed virtual operational engagement of the assistive symbol with the musical instrument. In some embodiments, the sound output may be provided in accordance with different musical tempo and/or expressions instructions (e.g., adagio, staccato, legato), which may be defined by the musical playing instructions presented by the system to the user.

In some embodiments, the system may be configured to provide guidance to teach the user how to make smooth transitions between current body part positions and "next" expected body part positions to carry out an action optionally while playing a musical instrument. Such guidance may herein also be referred to as "transition information", which may be provided in the form of assistive symbols, which may be animated or static, e.g., in the form of static or animated overlaying arrows, virtual body parts, and/or the like. In some examples, a "smooth transition" may pertain to a fingering sequence where one or more fingers can continue pressing one or more current keys during the transition for and while pressing one or more subsequent keys. In other words, in a smooth transition, the one or more subsequent keys can remain actionably engaged concurrently with the one or more current keys, without requiring their disengagement or lifting from the current keys, for pressing the one or more subsequent keys. A smooth transition may thus pertain to a transition between two sequential key engagement or fingering positions. It is noted that one or more keys actionably engaged in a current positions may be identical and/or different to one or more keys actionably engaged in a subsequent position.

For example, the system may be configured to present a user how to make transitions from a current actionable engagement to a next actionable engagement, e.g., with an instrument. The guidance may include the use of one or more assistive symbols to indicate to the user expected body part positions and/or movements based on current body part positions and/or movements. The assistive symbols, which may be overlaid on or near the user's body parts, may include instructional information and correction information (e.g., feedback) as part of the guidance and may include, for example, shadowing right and expected position, finger numberings, arrows optionally having different colors and/or line styles, and/or the like. For example, displayed arrows may indicate a direction of movement from a current position associated with a current action to a next position associated with a next action, and, for example, indicate magnitude of the distance to be traversed, course or track to be traversed by the body part, desired orientation of the body part and/or posture relative to an instrument, and/or indicate a velocity for transitioning between two different positions, e.g., to ensure timed and correct performance by the user. In some examples, guidance may be provided for arriving at an intermediate position, prior to arriving at a "final" position associated with at least one next action.

In some embodiments, the system may process actions associated with a current status of the user to determine the next actions to be performed to reach a next step in the learning and/or playing process. These actions may be associated with, for example, current body part positions and/or movements, current device(s) use, and/or current surrounding environment. Responsive to the determining, the system may identify the relevant body parts, relevant device(s), and/or relevant surrounding environment required to successfully carry out the next actions to reach the next step.

In some embodiments, the system may compare the actions associated with the current status of the user and the actions required to reach the next step in order to determine if the user may require guidance to successfully reach the next step. The guidance provided may include instructing the user how to make a transition from the current body part position to the next body part position, instructing the user as to which device to use and/or how to use, and/or instructing the user as to what is the relevant surrounding environment, optionally including the selection of the environment. Optionally, based on the comparison, the system may provide the user with "hints" suggesting what are the next actions to be taken.

In some embodiments, the system may add extra virtual body parts to assist in the transition from the current status to the next step. The extra virtual body parts may be displayed to the user together with the provided guidance, thereby exhibiting to the user a comprehensive scene which incorporates all the required inputs to allow the user to make a smooth transition from the current status to the next step. The added extra virtual body parts may optionally include movements associated with the body parts.

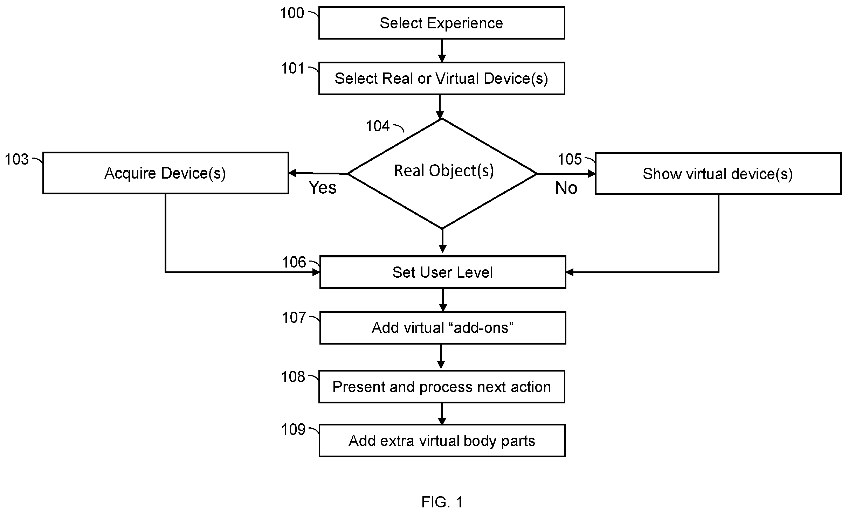

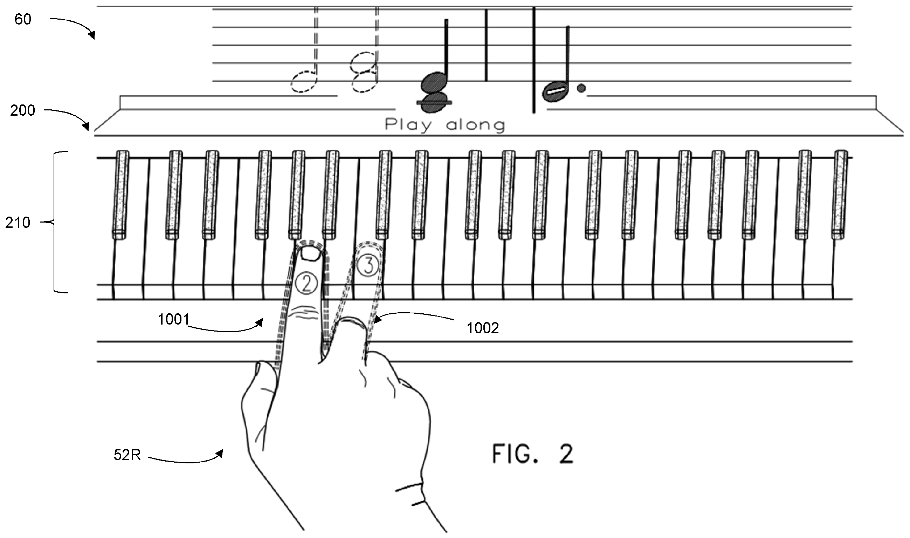

Reference is now made to **Figure 1** and **Figure 2****.** According to some embodiments, a method for providing a user, in a virtual, mixed or augmented reality environment, with information such as at least one assistive symbol **1000,** in relation to the playing of a musical instrument **200** by the user may include, for example, selecting an interactive skill honing and/or learning experience (block **100).** An experience may be one or more of the following: an instrument playing and/or learning experience; a vocal performance experience; painting; drawing; sculpturing; cooking; dancing; yoga; origami; cooking; performing a surgical procedure and/or any other medical and/or para-medical intervention (e.g., massaging); carpentry; sports; martial arts; and/or the like.

In some embodiments, the method may further include selecting a real and/or virtual utensil or device in relation to the selected experience. For example, in case an instrument playing and/or learning experience is selected, the user may be presented with one of the following selectable options: playing a keyboard instrument; a string instrument; a percussion instrument, and/or the like. In an example where the user selected a cooking experience, the user may be presented with the option of preparing a certain type of dish (dairy dish, meat, desert, etc.) (block **101).**

Without being construed as limiting, the selected instrument **200** is herein exemplified by a keyboard, schematically illustrated in **Figure 2****.**

In some embodiments, the method may further include selecting an object (block **104)** e.g., configured for operably engaging with the selected device (e.g., musical instrument). The object may be selected in accordance with the virtual device selected in block **101.**

In some embodiments, if the selected object is a real object **52,** the method may include acquiring and, optionally, tracking the real object (block **103)** and, for example, displaying an assistive symbol in overlay with the tracked real object.

In the example discussed herein, the selected real object **52** being tracked include the hands and fingers of a keyboard player, where the user's right hand is designated by alphanumeric reference "**52R**".

If the selected object is a virtual object, the method may include displaying to the user the selected virtual object (block **105),** e.g., at some predetermined position relative to the selected device (e.g., musical instrument).

A symbol provided **1000** conjunction (e.g., displayed in temporal and spatial correspondence) with a tracked real object may be represent, for example, a semi-transparent "glove" or other symbology, shown, for example, in overlay and/or next to one or both hands **52** of the user, and/or the like.

**Figure 2** schematically illustrates an example for a virtual glove, which is illustrated by dashed lines surrounding fingers **2** and **3** of right hand **52R.** In the present example, the appearance and/or shape of the assistive symbol displayed to the user may depend on whether the tracked objects (here: fingers **2** and **3** of the user's right hand **52R)** correctly engage with keys **210** of instrument **200** in accordance with musical notations **60** presented to the user.

For example, where finger **2** of the user's right hand **52R** is identified as correctly engaging with a selected key **210** of keyboard **200** in accordance with musical notation **60** presented to the user, a first assistive symbol **1001** may be displayed at a certain color (e.g., green or yellow). In some other examples, where the object is identified as correctly engaging with the instrument at a certain time stamp or during a certain time period, no assistive symbol may be displayed with respect to that object at that time stamp or during that time period. Contrariwise, finger **3** of right hand **52R** is exemplified as not correctly or not engaging with keyboard **200,** as provided by the musical notations **60** presented to the user, although finger **3** should of right hand **52R** is expected to engage with a key, in accordance with musical notations **60** presented to the user. Consequently, the system displays a second assistive symbol **1002** to indicate to the user a desired or correct position of finger **3** (schematically illustrated by "ghosted" dashed lines **1002),** at the relevant timing, with respect to the presented musical notations **60.**

In some embodiments, the method may include receiving a user proficiency level for operably engaging with the selected device (block **106).** The user level may be selected by the user, predetermined by the user, or adaptively determined, e.g., by the system. Based on the received user proficiency level, the system may determine a configuration for presenting the user with assistive symbols. In some examples, the assistive symbol display configuration may be set adaptively, e.g., based on the user's proficiency level, or dynamically, or predetermined throughout an entire instrument playing and/or learning session.

In some examples, a selected virtual object may be registered with a selected virtual device.

In some examples, a selected virtual object may be registered with a real object.

In some examples, a selected real object may be registered with a selected virtual device.

In some examples, a selected real object may be registered with a selected real object.

In some embodiments, the method may include presenting the user with virtual add-on devices, e.g., as add-ons to the user-selected (virtual or real) device (block **107).** Those virtual add-on devices may be actionably engageable by the user with the selected object (which can be real-world object tracked by the system or a virtual object).

With respect to a drum set (real or virtual), such add-on virtual devices may for example include additional virtual drums, cymbals, tom-toms, etc.

With respect to a guitar (real or virtual), such add-ons may for example include additional virtual pedals.

The expression "registration", as well as grammatical variations thereof, means bringing a real object (e.g., a user's body part) and/or virtual object into a positional and, optional, temporal, relationship with respect to a real or virtual device. Hence, after registration, the position relationship between a real or virtual object relative to a virtual or real object is known and automatically trackable by one or more sensors of the system.

Tracking sensors can include inertial sensors , such as accelerometers and/or gyroscopes, and/or non-inertial sensors such as cameras, imagers, distance measurement devices, magnetometers, physiological sensors (e.g., sensors to sense physical, chemical and/or biological quantities, and to output electronic signals in response to sensed quanty(ies)), and/or the like. In some embodiments, sensors may be incorporated in (e.g., haptic) gloves worn by the user providing sensory output indicative of the user engaging with an instrument and/or any other gesture sensing devices.

In some embodiments, the method may include tracking motion of the object and evaluating or analyzing the tracked motion, which may include actionably engagement with the device. Based on the performed evaluation or analysis, the system may provide the user with corresponding information (e.g., assistive symbol) (block **108).** The information may relate to feedback on past actions and/or provide information about future actions to be performed by the user. For example, the system may provide the user with feedback indicative of a level of correspondence of past user-initiated actionable engagement of an object with a musical instrument (correct /incorrect) and/or provide with the user with assistive symbols to guide the user how to transition to a position to cause correct engagement of the object with the musical instrument.

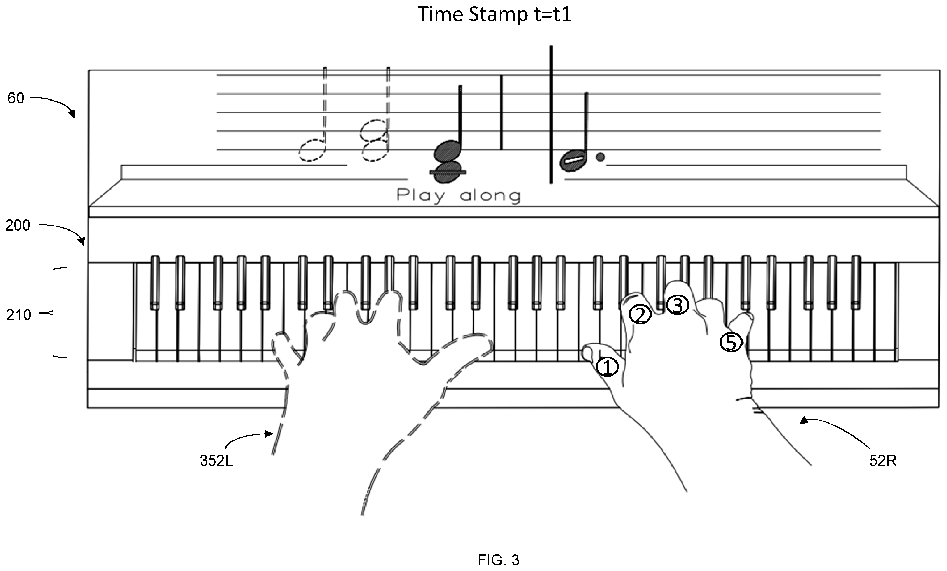

Additional reference is made to **Figure 3****.** In some embodiments, the method may include presenting the user with complementary information (e.g., assistive symbols) that are emulating additional objects that virtually actionably engage with the device (block **109).** Such additional objects may include, for example, a virtual hand accompanying the user, virtual fingers that complement the playing of the user, and/or the like.

As schematically shown in **Figure 3****,** a virtual left hand **352L** is schematically illustrated by dashed contour lines to virtually engage with keyboard **200** as virtually playing a left hand part of musical notations **60.** Musical sound representing the part indicated as being played by the virtual left hand is output to the user. The virtual left hand **352L** is shown alongside the user's right hand **52R** tracked by the system as engaging with keys **210** in accordance with the presented musical notations **60.**

In some examples, motion of virtual left hand **352L** is automatically adapted in accordance with a detected increase or decrease in tempo user's performance of the right hand **52R** tracked by the system.

In some examples, motion of virtual left hand **352L** corresponds to the musical notation **60** presented to the user.

In some examples, the motion of a user's body part may be tracked by a camera and/or by motion sensors, and/or by the detected operable engagement of the body part with an instrument or any other device. For example, the body part motion may be tracked based on an audio and/or sound output produced by the body part **52R** actionably engaging with the keys 210 of keyboard **200**.

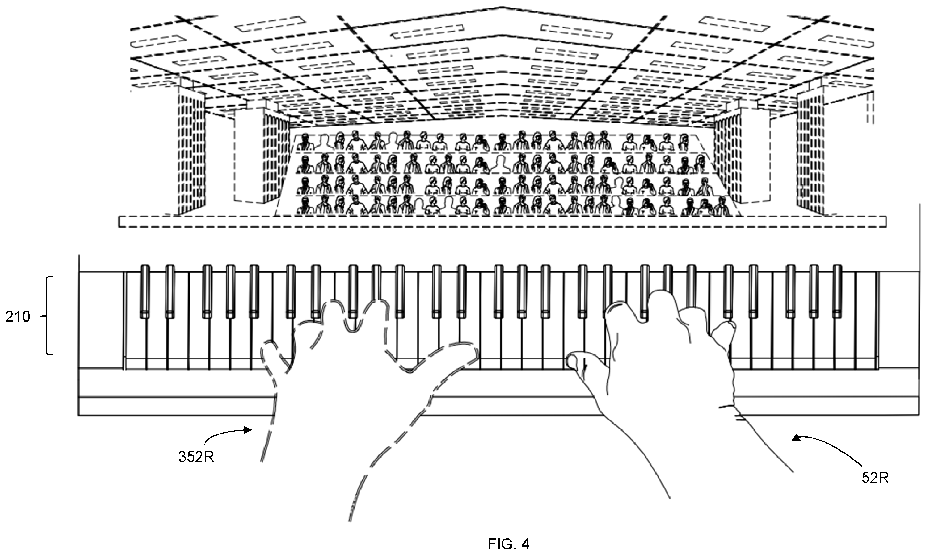

Additional reference is made to **Figure 4****.** In some embodiments, the method may include presenting the user with immersive scenery, including, for example, virtual crowd feedback (e.g., cheering, clapping). The virtual crowd feedback may be presented to the user in accordance with the user's attained proficiency level for actionably engaging in accordance with the instrument playing instructions presented to the user. An example can be seen in **Figure 4** illustrating that the crowd and the excitement are presented to the user, e.g., according to above mentioned criteria. Immersive experience may also pertain to playing alongside with other players (e.g., users, avatars, virtual players, real player, etc.).

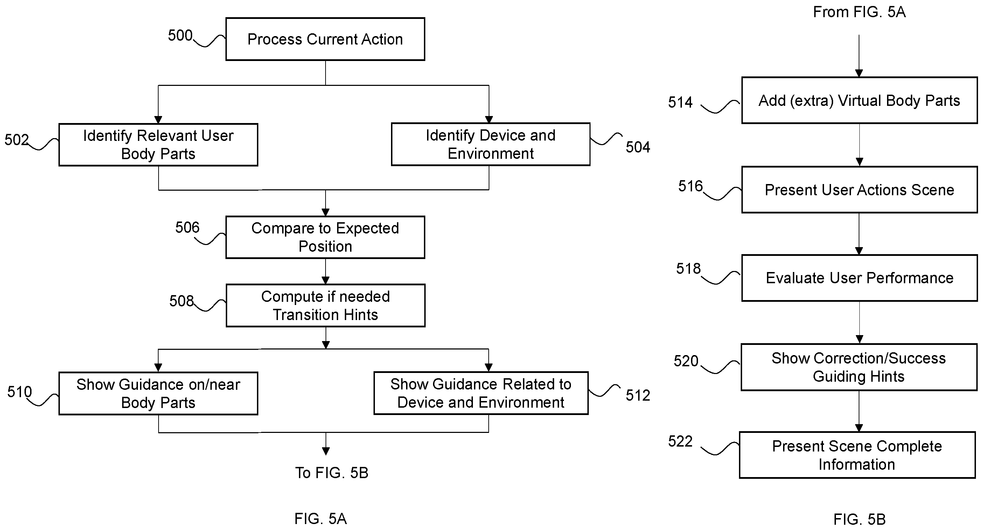

Further reference is made to **FIGS. 5A 5B****,** **6A** and **6B****.**

In some scenarios, a user may produce the correct sound or audio output at the desired timing in accordance with presented musical notations, but the execution itself for producing the sound or audio output may be suboptimal or erroneous with respect to the body part position and/or posture.

For example, an incorrect hand position may be employed for pressing a certain key on a keyboard, using wrong fingering, and/or wrong hand position, e.g., following incorrect transition from a first body part position to a second body part position for actionably engaging with a key.

In some embodiments, the system may be configured to detect a wrong position and/or transition, e.g., based on tracking the user's body part (e.g., using a camera, or the like).

In some embodiments, may present the user with assistive symbols indicative of a desirable or correct position and/or transition to ensure correct user engagement with the device (e.g., instrument) with respect to the user's posture, transition between postures, and/or transition between different body part positions.

In some examples, the system may be configured to provide the user with assistive symbols presenting the user how to correctly transition from a current body part position to a attain a desired "next" or expected body part positions to carry out an action at a desired timing, e.g., pressing a piano or keyboard key at the desired timing, e.g., in accordance with musical notation **60** presented to the user.

Accordingly, in some embodiments, a method as shown in **FIG. 1** may be adapted to provide a user, in the virtual, mixed or augmented reality environment, with "as-required" guidance to allow smooth transitions between at least one current action carried out by the user and at least one next action to be carried out to reach a next step in the learning and/or playing process. The guidance may include the use of assistive symbols which may be overlaid on or near the user's body parts.

In some embodiments, the method may include processing (e.g., identifying) the current actions performed by the user to determine the at least one next action which are required to be taken by the user in order to make a smooth transition to the next step (block **500).** The actions, both current and next, may involve, for example, playing musical notes or chords, hitting a drum, painting items (or elements), cooking, among any other actions which may be associated with an XR-based learning experience. The actions may include knowledge regarding all body parts previously used, currently in use, and those that may be used to reach the next step, knowledge regarding the relevant devices previously used, currently in use, and those that may be used (such as piano keys, drums sticks, pedals, virtual controllers, etc.), and knowledge with relation to the past, current, and next environment (such as a standing position, interaction with the environment, etc.). The current actions may be reevaluated over and over during the transition and until the next step is reached. In some examples, guidance for transitioning to a next action may be provided to the user if the at least one current action performed by the user meets a level of correspondence with respect to a desired current action, e.g., as defined by the system.

In some embodiments, the method may include identification of a first relevant body part characteristics associated with at least one current action, and identification of a relevant second body part required for executing the at least one next action (block **502).** The first and the second body parts may be identical or different body parts.

These body part characteristics associated with a current or next action may pertain to body part position(s), posture(s), movement(s), such as, for example, current hand positions, current posture, current movements, finger movements, leg movements, arm movements, and other current body part positions and/or movements required, for example, to carry out the at least one current action and/or to carry out the at least one next action.

In some embodiments, one or more tracking sensors of the system may also be employed for tracking the user's posture during performance, e.g., before, during and after actionably engaging (virtually and/or in reality) with an instrument and/or any other (virtual and/or real) device and/or utensil. This way, the system may identify correct and incorrect user posture, and instruct the user how to maintain correct posture, and/or provide instructions to attain correct posture, for example, to avoid injury while playing an instrument, e.g., prevent tendinitis, back problems, teeth problems in wind instruments, and/or the like.

Optionally, the at least one current action may be identified or determined by the system based on the definitions of the next actions to be carried out as defined in block **500.** Optionally, the at least one current action and/or next action may be predetermined in the system. Optionally, the next action may depend on an identified current action performed by the user.

In some embodiments, the method may include identification and registration of all surrounding environments relevant to the next actions (block **504).** These may include devices which may be required, possible scenarios including for example, virtual presence of other participants (e.g., virtual audience, virtual players, etc.), virtual decorative surroundings, among other relevant surrounding environments.

In some embodiments, the method may include, once the relevant current body parts with respect to a current action have been identified and, optionally, the current device and surrounding environment have been identified, comparing characteristics (including status) of the current action against characteristics of the at least one next action such as the next body part positions and/or movements and other actions expected from the user (block **506).** In some examples, based on the comparison, a decision may be made as to whether or not the user may require guidance in order to achieve a smooth transition to the next step. In some examples, the decision may also or alternatively depend on the skill level associated with the user. In some examples, the decision may additionally or alternatively depend on a level of difficulty that may be associated with the action to be performed by the user. Guidance or assistive symbols may thus be presented to the user in a selective or adaptive manner.

In some examples, no comparison step may take place and, the instances where and when to present the user with guidance to perform the next action may be predetermined in the system, e.g., based on an identified current action performed of the user (e.g., position in musical notation **60** performed by the user).

In some embodiments, the comparison step may include computing hints to suggest to the user what actions to take, and how to take the actions, for example, if the decision in block **506** includes a determination that guidance is required.

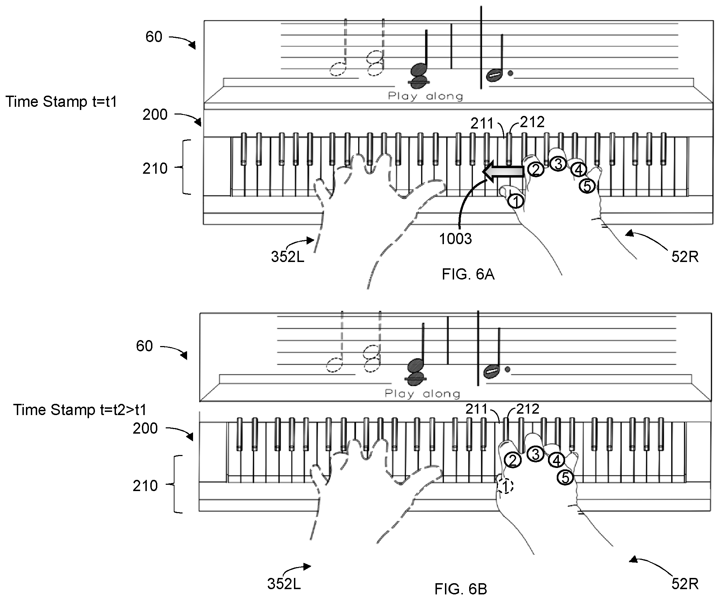

As schematically shown in Figures **6A** and **6B****,** the hints, guidance or assistive symbols may include transition (movement) suggestions (e.g., a third assistive symbol **1003** such as an arrow, virtual finger transition animation, etc.).

In the illustrated scenario, shown in **Figure 6A****,** at time stamp t=t1, finger 1 presses a first key **211,** and arrow **1003** guides the user to keep finger **1** stationary and pressed on the first key **211,** while moving fingers **2-5** over finger **1,** such that finger **2** can reach a second key **212** while finger **1** presses the first key **211,** as shown in **Figure 6B****,** for time stamp t=t2>t1. Finger 1 is therefore shown in **Figure 6B** as being positioned between the keys **210** and finger 2. This way, smooth transition between pressing the first key **211** and the second key **212** is ensured, which may then be followed by lifting finger **1** from first key **211.** In some examples, guidance may also be provided that indicates to keep finger 1 stationary with respect to the instrument, while moving finger 2 over finger 1.

In other examples, the system may present the user with assistive symbols or guidance on how and/or where to apply the body part (e.g., finger, leg, hand, head) and in which direction to move a body part, the magnitude of movement among other hints.

In some embodiments, the method may include using VR, AR or MR to provide guidance as to what are the next actions to be carried out as apply to body parts positioning and movement, as per the hints from block **508** obtained from block **510.** Optionally, providing guidance may include displaying assistive symbols overlaid over the body parts of the user or in close proximity.

In some embodiments, the method may include using VR, AR or MR to provide guidance as to what are the next actions to be carried out as apply to devices to be used and the surrounding environment, as per the hints obtained from block **508** (block **512).** For example, the guidance may include hints as to what key to press, to stand up, instructions to be performed, a direction to look at, to grab a tool which may be real or virtual, among other hints.

In some embodiments, the guidance, which may include assistive symbols may be presented to the user in the form of adding virtual body parts as required to implement the hints from blocks **510** and **512** (block **514).** Optionally, the virtual body parts are extra parts in addition to those employed in the performance of the example method of **FIG. 1****.** The virtual body parts may include hands, fingers, and legs, among other body parts. For example, a right hand may be shown on the VR, AR or MR device playing on a piano when the user is playing with the left hand, or adding a leg to kick a bass drum, etc.

In some embodiments, the method may include presenting all the user actions in a scene which is displayed in the VR, AR or MR device and combines all the information from blocks **510, 512,** and **514** (block **516).** The presented scene includes all the guidance information and the virtual body parts.

In some embodiments, the method may include capturing execution of the transition information presented to the user. In some examples, the method may include evaluating the user's performance of the executed transition to the next step and comparing the executed transition it to the expected performance (block **518**) to provide an evaluation output. The evaluation output may include providing a score about the performed transition, optionally indicative of a level-correspondence between the performed transition and a desired transition. The evaluation itself may include determining or computing characteristics related to the performed transition. Transition characteristics may pertain to one or more of the following: transition timing (e.g., speed), correctness, accuracy, and/or the like.

In some embodiments, the method may include processing the output from block **518** and determining whether the transition has been successful or whether correction is required **(520).** If correction is required, corrective action hints (also: guidance or transition information) may be provided to the user such as, for example, moving the finger to a particular key, and/or raising the hand, among others.

In some embodiments, the method may include presenting the user with a whole scene which may include, for example, the current status, the next step, and/or the transition actions (block **522).** The scene may include presenting to the user the outputs of all the blocks (blocks **500** - **520)** and/or may highlight all the relevant information. The presented scene may now become the current status for the next actions to follow in transitioning to the next step.

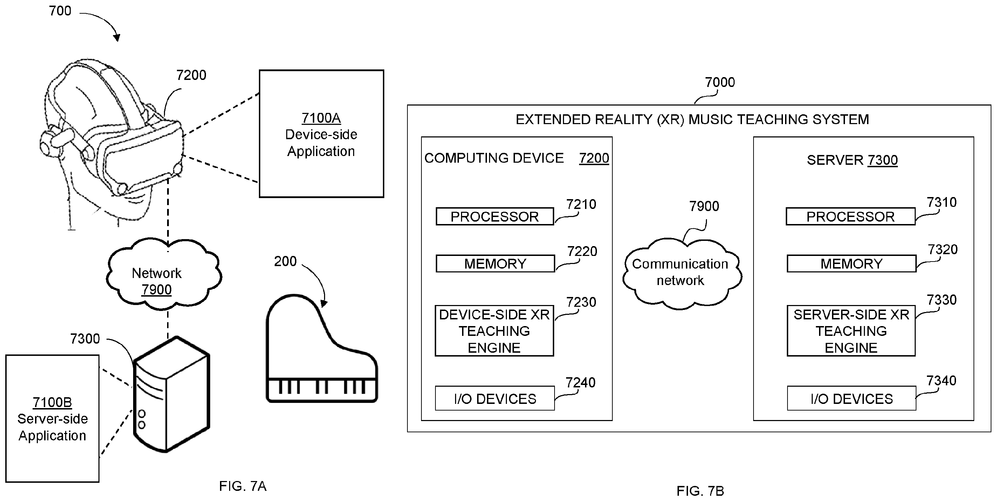

Additional reference is made to **Figure 7A** and **7B****.** A system **7000** may be configured to execute an application **7100** in accordance with the methods, processes and/or steps described herein. Some parts of application **7100** may be installed, executed on and/or by a device **7200** as a device-side application **7100A,** and some on or by a server **7300** as a server-side application **7100B.** User **700** may for example be provided with one or more aspects and/or embodiments in an XR (e.g., augmented, mixed or virtual reality) environment described in Israel patent application 300028, filed January 18, 2023; described in US patent application 17/388,050, filed July 29, 2021; and/or as described in US patent application 18/161,039, filed January 28, 2023; and/or as described in US provisional patent application 63/351,885, filed June 14, 2022; all of which are incorporated herein by reference in their entirety. Although embodiments are described herein with respect to playing a piano or keyboard instrument, this should by no means be construed in a limiting manner. Accordingly, embodiments may also be applicable with respect to teaching playing drums, guitar, string instrument, wind instruments, etc.

A user **700** who wishes to receive an XR-based (e.g., music and/or drawing) teaching lesson, for example, for learning how to play an instrument **200,** may activate application **7100** of system **7000.** Device **7200** may be, for example, a tablet computer, smart phone, a mobile phone, a desktop computer, a laptop computer, a smartwatch device, head-mounted display (HMD); and/or the like. An HMD may be embodied by or include glasses and/or goggles.

In some embodiments, application **7100** may be a client application, communicating with a corresponding server application running on a server **7300.** In some embodiments, device **7200** may be in wired or wireless communication with server **7300,** through a network **7900,** such as the Internet, intranet, LAN, WAN, 5G, or the like. In some examples, the system may include multiple devices communicating with each other over network **7900,** e.g., to allow collaborative working on a same artwork and/or different artworks and/or to provide collaborative tutoring, playing an instrument with other players, jamming, and/or the like.

In some embodiments, parts of the functionalities of the application may be performed, respectively, by a client application, a server application, or a combination thereof.

When user **700** has completed, for example, performing at least one set of musical notes and/or the creation of at least a part of an object of visual art, user **700** may be presented with the analysis results, comprising for example drawing errors, playing errors, feedback concerning progress made, feedback concerning progress and/or errors made relative to peers, performance accuracy, performance scores, general comments, and/or level change recommendations, and/or the like.

Additional reference is made to **Fig. 7B****.** Computing device **7200** may comprise one or more processors **7210** and one or more memories **7220.** Any one of processors **7210** may be a Central Processing Unit (CPU), a microprocessor, an electronic circuit, an Integrated Circuit (IC) and/or the like. Processors **7210** may be utilized to perform computations required by system **7000** and/or any of its subcomponents.

System 7000 may further comprise one or more Input/Output devices **7240** and, optionally, Input/Output ports, which may be connected to one or more Input/Output devices 7240.

Similarly, server **7300** may include a processor **7310,** and a memory **7320.** Execution of computer-executable instructions stored in memory **7320** by processor **7310** may result in a server-side XR teaching engine **7330.** Server **7300** may further include input/output devices **7340.**

The term "processor", as used herein, may additionally or alternatively refer to a controller. Processor **7210** and/or processor **7310** may be implemented by various types of processor devices and/or processor architectures including, for example, embedded processors, communication processors, graphics processing unit (GPU)-accelerated computing, soft-core processors and/or general purpose processors.

Memory **7220** may comprise data and algorithm code which, when executed by processor **7210,** results in a device-side XR teaching engine **7230,** e.g., as outlined herein.

Memory **7320** may comprise data and algorithm code which, when executed by processor **7310,** results in a server-side teaching engine **7330,** e.g., as outlined herein.

Memory **7220** and/or memory **7320** may be implemented by various types of memories, including transactional memory and/or long-term storage memory facilities and may function as file storage, document storage, program storage, or as a working memory. The latter may for example be in the form of a static random access memory (SRAM), dynamic random access memory (DRAM), read-only memory (ROM), cache and/or flash memory. As working memory, Memory **7220** and/or memory **7320** may, for example, include, e.g., temporally-based and/or non-temporally based instructions. As long-term memory, Memory **7220** and/or memory **7320** may for example include a volatile or non-volatile computer storage medium, a hard disk drive, a solid state drive, a magnetic storage medium, a flash memory and/or other storage facility. A hardware memory facility may for example store a fixed information set (e.g., software code) including, but not limited to, a file, program, application, source code, object code, data, and/or the like.

Input devices of I/O devices **7240** and/or **7340** may for example include inertial and/or non-inertial sensors such as cameras, microphones, linear acceleration sensors, angular acceleration sensors, gyroscopes, satellite-based navigation systems (e.g., the US-based Global Positioning System), microphones, direction and selection control devices (e.g., joystick, a trackball, a mouse), gravitational sensors, and/or a touch sensitive screen.

Output devices of I/O devices **7240** and/or **7340** may include a display, a touch-sensitive display, a speaker, a tactile output device, a haptic output device. In some examples, the input device and the output device may be the same device, e.g., in the case of a touchscreen. The display may be a head-mountable display (HMD). In some examples, feedback may be provided in a virtual-reality, augmented-reality, or mixed-reality feedback modality.
An input device may acquire an image of a user-created object of visual art, and an output device may provide the user with feedback about the user-created object of visual art via an output device. An input device may acquire an input relating to an instrument playing performance by the user, and an output device may provide the user with feedback relating to the user's instrument playing performance, and/or provide the user with a presentation of musical notations to be played. Feedback that may be provided may include qualitative, quantitative feedback, and/or corrective feedback.

In some embodiments, the system may be configured to monitor one or more app users and derive, based on the monitoring, user emotion information (e.g., the user's current emotional state). For example, the system may be configured to identify one or more emotions experienced, perceived and/or felt by the user and, optionally, determine the perceived intensity of the identified emotion. Non-limiting examples of user emotions that can be identified by the system include: joy, pride, amusement, anger, nervousness, stress, and/or sadness.

In some embodiments, emotion information relating to one or more users and/or one or more members of an audience may include and/or be associated with time data (e.g., start and end time stamp of a certain emotion or combination of emotions, time of day, etc.), and/or may be registered or mapped with musical notations presented and/or performed by the user(s), and/or with a user profile.

The system may be configured to determine which sequence of musical notations evokes which emotion(s); and/or is more likely and/or less likely to evoke certain emotions, for example, with respect to a certain user (or user profile) and/or in one or more individual audience members and/or in an audience as a whole. In some embodiments, emotion information may also include information about the location of the app user and/or the audience. For example, a certain setting and/or location. In some examples, a machine learning model may be trained for associating emotion information with musical notations, user profile information, time data information, and/or location information. The system may include such trained machine learning model for outputting emotion information, optionally along with and/or based on user profile information, musical notation sequence, time data, and/or location information, associated with the app user playing an instrument and/or singing, and/or associated with the audience in a holistic manner, and/or with individual audience member(s). It is noted that terms such as "emotion", "emotional state", "feeling", "sentiment" and "mood", may herein be used interchangeably.

In some examples, the system may be configured to determine or identify one or more emotions felt by a user and, optionally, determine the intensity of the one or more emotions felt (also: perceived) by a user, while playing an instrument and/or while singing. In some examples, the system may configured to identify an emotion and, optionally, the associated intensity, not only while the user is playing an instrument and/or singing, but also before the user starts playing an instrument and/or starts singing, and/or after completion playing the instrument and/or after completion of a singing session.

In some embodiments, the system may be configured to determine an emotion intensity for predetermined emotion categories (e.g., happiness, satisfaction, joy, pride, anger, frustration, boredom), without performing the step of identifying a type of emotion perceived by the user.

The system may monitor the user by receiving one or more sensor outputs that can pertain to various emotion-related parameter information. Sensor outputs may relate, for example, to monitored physiological and/or behavioral parameters (e.g., gestures, words spoken by the user(s)). In some examples, monitoring of physiological and/or behavioral parameters of an app-user and/or individually of one or more audience members and/or holistically to an audience as a whole, may pertain to conscious and/or to unconscious reporting of emotional information.

Values relating to the monitored physiological parameters and/or behavioral parameters and/or user-provided input in response to prompts, may be processed for deriving emotion information including, for example, performing emotion classification. Embodiments of the system take into consideration (e.g., collectively analyze) data descriptive of a plurality of different or distinct signals received by the system determining, for example by a trained machine learning model, optionally in combination with a rule-based approach, one or more emotions experienced by the user(s), of an audience member and/or for associating emotion(s) associated with the entire audience.

Considering the audience, the term "behavioral parameter" may relate to a social or "third party" response parameter for determining emotions that are evoked in a crowd or audience "as a whole" in response to experiencing a performance of the at least one user. Emotions evoked in one or more audience members and/or associated with respect to an audience as a whole may include a sentiment towards a player/performer.

In some examples, one or more sensors of a client device employed by one more user for engaging with the teaching app, such as a head-mounted display (HMD), tablet computer, laptop computer, smartphone, and/or wearables, may be configured to monitor physiological and/or behavioral parameters of the one or more users. For example, electronic signals produced by inertial sensors , such as accelerometers and/or gyroscopes, and/or (e.g., wearable and/or non-wearable) non-inertial sensors such as cameras, (e.g., optical) spectrometers, imagers, distance measurement devices, magnetometers, PPG sensors, EEG sensors, chemical sensors, biological sensors (e.g., sweat sensors and/or other non-invasive and/or invasive (e.g., bodily fluid and/or human tissue) analyte sensors such as glucose sensors, hormone sensors, etc.) and/or the like, included in a client device such as an HMD, may be processed for monitoring physiological and/or behavioral parameters the one or more users. Based on the processing of the signals relating to the monitored physiological and/or behavioral parameters of an app user, an emotional state of the app user may be determined, optionally (substantially) in real-time.

It is noted that the expressions "concurrently" and "in real-time" as used herein may also encompass the meaning of the expression "substantially concurrently" and "substantially in real-time".

The term "Real-time" as used herein may refer to the updating of information at essentially the same rate as the data is received. More specifically, in the context of the present invention "real-time" is intended to mean that sensor data is acquired and processed at a high enough data rate and at a low enough time delay to provide an output descriptive of an emotional state of a user such that the output represents a current emotional state.

In some examples, a user's head movement and/or gaze direction parameters may be tracked by at least one wearable sensor included, e.g., in an HMD, and/or at least one non-wearable sensor, for determining, for instance, at least one parameter value related to the interaction between various app-users, for example, collaboratively performing (e.g., jamming) a musical piece. The at least one interaction parameter value may be analyzed for determining emotion information of the collaboratively performing app users. It is noted that the term "musical piece" may not be limited to predetermined musical notations presented to a user, but also to an entirely or partly improvised musical playing and/or singing performance.

In some examples, an HMD and/or other client devices may include sensors configured to monitor eye-blinking parameters of the one or more users, for example, to determine a level of happiness and/or nervousness of the user(s).

In some embodiments, physiological and/or behavioral parameters of at least one audience member experiencing (e.g., listening to) the performance of at least one user playing an instrument and/or singing a musical piece, may be monitored for determining one or more emotions evoked in the at least one audience member and/or in the audience as a whole.

In the discussion that follows, the expression "physiological parameter" may pertain to any one or more of the following: Facial expressions, blood pressure, pulse; sweat rate; hormone level; breathing pattern; eye movement; gaze direction; body temperature; Electroencephalography (EEG) signals; skin color (e.g., human facial color); galvanic skin responses (GSR); and/or Photoplethysmography (PPG) signals. It is noted that the term "facial expression" also encompasses the meaning of the term "facial micro-expressions". With respect to facial skin color (increased) blushing may for example be associated by the system with increased excitement, joy and/or embarrassment.

Behavioral parameters may pertain, for example, to user motion, user movement, user posture, gestures (e.g., "high five" detection, indicative of success and/or happiness, applause, hugging), voice output, and/or the like.

In some embodiments, the system may be configured to monitor voice output (e.g., monitor verbal communication characteristics) of one or more users and/or audience members, and analyze the monitored voice output, to determine at least one expressed emotion and, optionally, an intensity thereof, of one or more users and/or audience members, and/or for an audience as a whole.

In some embodiments, emotion information of one or more of a plurality of members of an audience may be combined (e.g., a weighted sum or rolling averages may be calculated relating to a parameter value pertaining to emotion), for determining, based on the combination, one or more emotions evoked in the audience as a whole. Additional or alternative methods may be employed for determining one or more emotions evoked in an audience.

The analysis may include determining different voice output parameters such as, for example, voice loudness, frequency, tone, pitch, and/or the like. In some examples, the system may be configured to perform speech analysis such as different prosodic parameters of the speech utterances including, for example, number of spoken words per minute. In some examples, speech analysis may include natural language processing to derive semantic information (e.g., contextual meaning) of the spoken words by the user(s), for determining, based thereon, emotion information.

In some embodiments, monitoring and analysis of behavioral parameters of app users and/or audience members may also include the monitoring and analysis of non-verbal communication parameters between two or more audience members, and/or between at least one audience member and a performing app user. Non-verbal communication parameters may include facial expressions, verbal interaction, gaze-interaction, and/or audience posture, and/or audience movements (e.g., physical interaction between audience members, and/or between members of the audience and the app user(s)). In some embodiments, the system may be configured to analyze applause characteristics (intensity, length, etc.) for determining an audience emotion.

In some embodiments, the system may be configured to monitor and analyze physiological of audience members experiencing app user performance (app user playing an instrument and/or singing a musical piece) for determining emotion information with respect to a member of the audience, or, collectively, for the entire audience.

An audience member may be located in the same environment (e.g., room) as the performing user(s), and/or located remotely from the performing users (e.g., experience the user performance through a streaming platform).

In some embodiments, the system may include an emotion recognition and intensity assessment (ERIA) engine configured to determine emotion information for one or more users. In some examples, the ERIA engine may employ and/or include one or more machine-learned (ML) models.

A device such as, for example, a tablet computer, smart phone, a mobile phone, a desktop computer, a laptop computer, a smartwatch device, head-mounted display (HMD); and/or the like, may include one or more cameras, transducers, and/or the like, configured to sense a physical, biological and/or chemical quantity, and output electronic signals processable by the system to determine or derive, based on the processing of the electronic signals, app-user emotion information (e.g., an emotional state, feeling, mood, and/or the like, and/or an intensity of perceived or felt emotion).

Additional or alternative parameter values that may be taken into consideration for gathering user emotion information include a type of song selected by the user for playing and/or singing, the musical expressions (e.g., loudness, softness, dynamics) conveyed by the user playing the selected song(s), and/or the like.

In some examples, the system may be configured to determine a level (also: intensity) of joy and/or stress of a user while creating a visual arts object, and/or while playing an instrument, and, optionally, provide the user with corresponding feedback. In some embodiments, the system may automatically update a skill level exercise based on the received and processed sensor output.

In some examples, the system may present the user with prompts requesting the user to provide physiological, behavioral, and/or emotion-related information (e.g., conscious "self-reporting"). Prompts may for example be in the form of a questionnaire (e.g., open response questions, multiple choice questions, and/or closed response questions), and/or rating scale. User-provided prompt feedback may be analyzed by a sentiment analysis engine of the system.

In some examples, the system may also be configured to receive and process socio-economic information about the user.

In some embodiments, the app user's emotional state may be broken down to their level of satisfaction from any specific usage session or any portion of the app (e.g., "atomized indexes") and/or considered in relation to overall app experience. In some examples, additional or alternative experiences resulting from app usage (such as positive social interactions or feedback experienced while using the app) may also be taken into consideration for deriving user-emotional information.

In some embodiments, in addition to instrument players and/or singers, app users may also include one or more members of an audience experiencing the performance of instrument players and/or singers (e.g., social indices). The system may be configured to monitor audience response such as, for example, level of applause, audience facial expression, audience feedback provided by via social media platforms (e.g., via the teaching app and/or third party apps); and/or the like. The system may be configured to analyze the audience response to determine audience-related emotional information.

Data received by the system relating to emotion-related parameter information of one or more app-users and/or audience members may be analyzed for determining the probability of continued app utilization by the one or more users and/or audience members. In some examples, the system may be configured to associate an emotional state determined to be experienced by an app user with a score. In some embodiments, the system may determine a weighted overall score for a plurality of emotional states collectively experienced by an app user. Based on the determined score, the system may determine the probability of continued app utilization by the one or more users and/or audience members, and/or update features and/or exercises and/or musical pieces presented to the app-users.

Data about the emotion-related parameter information may be analyzed to determine user satisfaction and/or to increase user retention, for example, by selecting, updating or presenting, based on the performed analysis, information presented to the user.

For example, based on determined emotion information, the system may adapt the user's skill level (e.g., to provide the user with comparatively less challenging, or more challenging exercises). For example, if an identified emotional state includes "boredom", the system may update (e.g., raise) a user's skill level and present them with more challenging musical pieces. Conversely, if the system identifies a user's emotional state as "frustration", the system may update (e.g., lower) a user's skill level and present them with less challenging musical pieces. The system may for example change lesson assignment, change a level of difficulty of a same musical exercise; adjusting tolerance thresholds; adapting UX feature presentations (e.g., increase/decrease occurrence frequency of pop-ups, reminders, surveys, adapting UX feature presentations etc.); providing sharing and/or update playing recommendations (e.g., recommend singing in duet instead of solo alone); present motivational information (e.g., voucher gifting, feedback about skill advancements made) and/or the like. Adapting UX feature presentations may include adjusting real-time feedback and/or holistic feedback presentations. Real-time feedback may be provided while a user is playing a musical piece. Holistic feedback may relate to the overall performance of one or more musical pieces played and/or sung by a user.

In some embodiments, the system may increase or decrease tolerance threshold (also: relax accuracy requirements) with respect to mistimed playing, out-of-pitch singing, and/or the like, to decrease user frustration and/or increase happiness.

For example, based on determined emotion information, the system may employ alternate tolerance thresholds with respect to displaying negative feedback to the user. For example, if an identified emotional state includes "frustration" or "unhappiness", the system may increase its tolerance towards mistimed playing, partial chord playing, and/or the like, and thus alter the feedback presented in any of the following ways: decrease ongoing indications of errors to the user while playing; increase indications of success (such as quick celebratory animations indicating success in a subsection of the piece); increase the overall score awarded to the user at the end of the play session; and/or other similar feedback measures. The system may also choose to alter or otherwise avoid displaying holistic feedback presented to the user, such as verbal feedback relating to the overall performance, accumulated quantitative scores, and/or the like.

In some embodiments, self-reported emotions may be compared against respective unconsciously reported emotions received through, e.g., physiological and/or behavioral app-user monitoring, for determining a level of correspondence between at least one self-reported emotions and a respective at least one unconsciously reported emotions. Based on the determined level of correspondence, the system may adapt the weights associated with a self-reported emotional state and a same unconsciously reported emotional state for deriving a combined evaluation of the respective emotional state. For example, self-reported "happiness" may be compared with unconsciously reported "happiness". In some examples, the lower a determined level of correspondence (e.g., below a certain threshold value), the unconsciously reported "happiness" may be given more weight in determining a global happiness score. Conversely, in some examples, the higher a determined level of correspondence, the self-reported "happiness" and unconsciously reported "happiness" may both be provided with a more balanced distribution of weight.

The components detailed below may be implemented as one or more sets of interrelated computer instructions, executed for example by any of processors **7210** and/or processors **7310.** In some embodiments, some of the components may be executed by one computing device while others may be executed by another computing platform such as server **7300.** The components may be arranged as one or more executable files, dynamic libraries, static libraries, methods, functions, services, or the like, programmed in any programming language and under any computing environment.

A communication module of I/O devices **7240** and/or **7340** may be configured to enable wired and/or wireless communication between the various components and/or modules of the system and which may communicate with each other over one or more communication buses (not shown), signal lines (not shown) and/or network **7900.**

Network **7900** may be configured for using one or more present and/or future communication formats, protocols and/or technologies such as, for example, to internet communication, optical or RF communication, telephony-based communication technologies and/or the like. In some examples, the communication module may include I/O device drivers (not shown) and network interface drivers (not shown) for enabling the transmission and/or reception of data over network **7900.** A device driver may, for example, interface with a keypad or to a USB port. A network interface driver may for example execute protocols for the Internet, or an Intranet, Wide Area Network (WAN), Local Area Network (LAN) employing, e.g., Wireless Local Area Network (WLAN)), Metropolitan Area Network (MAN), Personal Area Network (PAN), extranet, 2G, 3G, 3.5G, 4G, 5G, 6G mobile networks, 3GPP, LTE, LTE advanced, Bluetooth^{®} (e.g., Bluetooth smart), ZigBee^{™}, near-field communication (NFC) and/or any other current or future communication network, standard, and/or system.

The teaching engine (implemented, for example, by device-side teaching engine 7230 and/or server-side teaching engine **7330)** may be configured to implement steps, processes, and/or methods as described herein.

### Additional Examples:

Example 1 concerns a system configured and/or a method for providing a user with information relating to the playing of a musical instrument presenting the user with instrument playing instructions to be executed by at least one user. The system may be configured to execute and/or the method may include:
identifying, of the at least one user, at least one object expected to operably engage with the musical instrument for executing the instrument playing instructions;
tracking movement of the identified at least one object; and
displaying to the user at least one assistive symbol at least partly in correspondence with the presented instrument playing instructions.

Example 2 includes the subject matter of Example 1 and, optionally, wherein the at least one assistive symbol is displayed in a virtual environment, mixed environment or in an augmented environment in overlay with the at least one identified object.

Example 3 includes the subject matter of examples 1 and/or 2 and, optionally, wherein the at least one object is a real-world body part viewable by the user via a see-through display, or a virtual representation of the real-world body part of the user.

Example 4 includes the subject matter of any one or more of the examples 1 to 3 and, optionally, wherein the at least one object is a percussion mallet viewable by the user via a see-through display, or a virtual representation of the percussion mallet.

Example 5 includes the subject matter of any one or more of the examples 1 to 4 and, optionally, wherein the at least one assistive symbol represents one or more of the following:
a virtual assisting object virtually operably engaging with the musical instrument;
a guidance symbol for providing the user with feedback and/or guidance on how to execute the received instrument playing instructions.

Example 6 includes the subject mater of any one or more of the examples 1 to 5 and, optionally, wherein the assistive symbol is displayed in overlay with a corresponding at least one object to guide the user how to operably engage with the musical instrument.

Example 7 includes the subject matter of any one or more of the examples 1 to 6 and, optionally, wherein the assistive symbol is displayed in overlay with a corresponding at least one object to guide the user how to operably engage with the musical instrument in accordance with the received playing instructions.

Example 8 includes the subject matter of any one or more of the examples 1 to 7 and, optionally, identifying operable engagement of the at least one object with the musical instrument; determining a level of correspondence between the operable engagement of the at least one object and the received playing instructions; and displaying the assistive symbol in accordance with the determined level of correspondence.

Example 9 includes the subject matter of any one or more of the examples 1 to 8 and, optionally, identifying a mismatch event where the level of correspondence does not meet a performance success criterion for playing the musical instrument; and displaying an updated assistive symbol for providing the user with guidance on how to engage the object with the musical instrument to prevent recurrence of the mismatch event.

Example 10 includes the subject matter of any one or more of the examples 1 to 9 and, optionally, wherein the displaying of the assistive symbol at least partly in correspondence with the received musical notations includes: displaying a virtual operational engagement of the assistive symbol with the musical instrument for providing an animated representation of operable engagement in accordance with the received playing instructions.

Example 11 includes the subject matter of example of any one or more of the examples 1 to 10 and, optionally, presenting to the user a sound output that corresponds to the displayed virtual operational engagement of the assistive symbol with the musical instrument.

Example 12 includes the subject matter of example of any one or more of the examples 1 to 11 and, optionally, wherein the musical instrument is a real-world instrument or a virtual object representing the real-world instrument.

Example 13 includes the subject matter of example of any one or more of the examples 1 to 12 and, optionally, wherein the assistive symbol represents a virtual body part.

In some examples, a method for providing a user with information relating to the playing of a musical instrument, comprises:
presenting the user with instrument playing instructions to be executed by at least one user;
identifying, of the at least one user, at least one object expected to operably engage with the musical instrument for executing the instrument playing instructions;
tracking movement of the identified at least one object; and
displaying to the user at least one assistive symbol at least partly in correspondence with the presented instrument playing instructions.

In some examples, the at least one assistive symbol is displayed in a virtual environment, mixed environment or in an augmented environment in overlay with the at least one identified object.

In some examples, the at least one object is a real-world body part viewable by the user via a see-through display, or a virtual representation of the real-world body part of the user.

In some examples, the at least one object is a percussion mallet viewable by the user via a see-through display, or a virtual representation of the percussion mallet.

In some examples, the at least one assistive symbol represents one or more of the following:
a virtual assisting object virtually operably engaging with the musical instrument;
a guidance symbol for providing the user with feedback and/or guidance on how to execute the received instrument playing instructions.

In some examples, the assistive symbol is displayed in overlay with a corresponding at least one object to guide the user how to operably engage with the musical instrument.

In some examples, the assistive symbol is displayed in overlay with a corresponding at least one object to guide the user how to operably engage with the musical instrument in accordance with the received playing instructions.

In some examples, the method includes identifying operable engagement of the at least one object with the musical instrument;
determining a level of correspondence between the operable engagement of the at least one object and the received playing instructions; and
displaying the assistive symbol in accordance with the determined level of correspondence.

In some examples, the method includes identifying a mismatch event where the level of correspondence does not meet a performance success criterion for playing the musical instrument; and
displaying an updated assistive symbol for providing the user with guidance on how to engage the object with the musical instrument to prevent recurrence of the mismatch event.

In some examples, displaying of the assistive symbol at least partly in correspondence with the received musical notations includes:
displaying a virtual operational engagement of the assistive symbol with the musical instrument for providing an animated representation of operable engagement in accordance with the received playing instructions.

In some examples, the method includes presenting to the user a sound output that corresponds to a displayed virtual operational engagement of the assistive symbol with the musical instrument.

In some examples, the musical instrument is a real-world instrument or a virtual object representing the real-world instrument.

In some examples, the assistive symbol represents a virtual body part.

In some examples, a system is provided configured to provide a user with information relating to the playing of a musical instrument, the system comprising:
a processor; and
a memory storing instructions executable by the processor to result in the execution of a method according to any one of the preceding examples.

In some examples, a method for providing a user with information relating to the playing of a musical instrument includes: identifying at least one actionable engagement executed by the user with the musical instrument;
receiving data descriptive about at least one next actionable engagement of the user with the instrument; and
determining, based on the current actionable engagement and the next actionable engagement, transition information to be presented to the user for making a transition from the current actionable engagement to the next actionable engagement.

In some examples, the method comprises displaying to the user the transition information.

In some examples, the method includes comprising evaluating the transition performed by the user.

In some examples, the transition information is displayed as guidance symbols and/or hints.

In some examples, the transition information is displayed in overlay to body parts of the user and/or in overlay to the instrument played by the user.

In some examples, the transition information includes virtual body parts displayed to the user.

In some examples, the transition information includes the displaying of moving symbols for tracing by the user.

In some examples, a method for providing a user with information relating to the playing of a musical instrument may include:
identifying at least one actionable engagement executed by the user with the musical instrument;
receiving data descriptive about at least one next actionable engagement of the user with the instrument; and
determining, based on the current actionable engagement and the next actionable engagement, transition information to be presented to the user for making a transition from the current actionable engagement to the next actionable engagement.

In some examples, the method comprises displaying to the user the transition information.

In some examples, the method includes evaluating the transition performed by the user.

In some examples, the transition information is displayed as guidance symbols or hints.

In some examples, the transition information is displayed in overlay to body parts of the user and/or in overlay to the instrument played by the user. The method of claim 1, wherein the transition information includes the displaying of moving symbols for tracing by the user.

In some examples, the transition information includes one of the following: a virtual body part, an arrow, a geometric symbol, or any combination of the aforesaid.

Embodiments pertain to a system configured to provide a user with information relating to the playing of a musical instrument, the system comprising: a processor; and a memory storing instructions executable by the processor to result in the execution of the following:
identifying at least one actionable engagement executed by the user with the musical instrument;
receiving data descriptive about at least one next actionable engagement of the user with the instrument; and
determining, based on the current actionable engagement and the next actionable engagement, transition information to be presented to the user for making a transition from the current actionable engagement to the next actionable engagement.

In some examples, the system is configured to display to the user the transition information.

In some examples, the system is configured to evaluate the transition performed by the user.

In some examples, the transition information is displayed by the system to the user as guidance symbols or hints.

In some examples, the transition information is displayed in overlay to body parts of the user and/or in overlay to the instrument played by the user.

In some examples, the transition information includes the displaying of moving symbols for tracing by the user.

In some examples, the transition information includes one of the following: a virtual body part, an arrow, a geometric symbol, or any combination of the aforesaid.

Embodiments pertain to a system configured to provide a user with information relating to the playing of a musical instrument, the system comprising:
a processor; and
a memory storing instructions executable by the processor to result in the execution of the following:
presenting the user with instrument playing instructions to be executed by at least one user;
identifying, of the at least one user, at least one object expected to operably engage with the musical instrument for executing the instrument playing instructions;
tracking movement of the identified at least one object; and
displaying to the user at least one assistive symbol at least partly in correspondence with the presented instrument playing instructions.

In some examples, the at least one assistive symbol is displayed by the system in a virtual environment, mixed environment or in an augmented environment in overlay with the at least one identified object.

In some examples, the at least one object is a real-world body part viewable by the user via a see-through display, or a virtual representation of the real-world body part of the user.

In some examples, the assistive symbol is displayed in overlay with a corresponding at least one object to guide the user how to operably engage with the musical instrument.

In some examples, the system is configured to identify operable engagement of the at least one object with the musical instrument;
determining a level of correspondence between the operable engagement of the at least one object and the received playing instructions; and
displaying the assistive symbol in accordance with the determined level of correspondence.

In some embodiments, the system is configured to identify a mismatch event where the level of correspondence does not meet a performance success criterion for playing the musical instrument; and to display an updated assistive symbol for providing the user with guidance on how to engage the object with the musical instrument to prevent recurrence of the mismatch event.

In an example, a system is disclosed configured to determine an emotional state of one or more users of an instrument teaching and/or singing teaching app, the system comprising:
a processor; and
a memory storing instructions executable by the processor to result in the execution of the following:
presenting to the at least one app user with information about a musical piece to be played and/or sung;
receiving data relating to one of the following of the at least one app user: user physiological parameter, behavioral parameter, or both;
processing the received data to determine one or more emotional states of the at least one app user; and
based on the determined one or more emotional states, determining whether the at least one app user is to be presented with updated information or not including, for example,; updated lesson assignment; an updated level of difficulty of a same musical exercise; adjusted tolerance thresholds; adapting UX feature presentations; adapting social sharing recommendations; or any combination of the above.

In some examples, the system is configured to determine, based on the one or more emotional states, the probability of continued app utilization.

In some examples, the system is configured to adapt, based on the determined probability of continued app utilization, information presented to the user.

In some examples, the adapting of the information includes adapting one or more of the following: lesson assignment; changing a level of difficulty of a same musical exercise; adjusting tolerance thresholds; adapting UX feature presentations; adapting social sharing recommendations; or any combination of the above.

In some examples, the monitoring the at least one behavioral parameter includes for example the monitoring of: facial expressions, gestures, posture, motion and/or movement of the at least one app user.

The various features and steps discussed above, as well as other known equivalents for each such feature or step, can be mixed and matched by one of having ordinary skills in this art to perform methods in accordance with principles described herein. Although the disclosure has been provided in the context of certain embodiments and examples, it will be understood by those skilled in the art that the disclosure extends beyond the specifically described embodiments to other alternative embodiments and/or uses and obvious modifications and equivalents thereof. Accordingly, the disclosure is not intended to be limited by the specific disclosures of embodiments herein.

Any digital computer system, module and/or engine exemplified herein can be configured or otherwise programmed to implement a method disclosed herein, and to the extent that the system, module and/or engine is configured to implement such a method, it is within the scope and spirit of the disclosure. Once the system, module and/or engine are programmed to perform particular functions pursuant to computer readable and executable instructions from program software that implements a method disclosed herein, it in effect becomes a special purpose computer particular to embodiments of the method disclosed herein. The methods and/or processes disclosed herein may be implemented as a computer program product that may be tangibly embodied in an information carrier including, for example, in a non-transitory tangible computer-readable and/or non-transitory tangible machine-readable storage device. The computer program product may be directly loadable into an internal memory of a digital computer, comprising software code portions for performing the methods and/or processes as disclosed herein. The term "non-transitory" is used to exclude transitory, propagating signals, but to otherwise include any volatile or non-volatile computer memory technology suitable to the application.

Additionally, or alternatively, the methods and/or processes disclosed herein may be implemented as a computer program that may be intangibly embodied by a computer readable signal medium. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a non-transitory computer or machine-readable storage device and that can communicate, propagate, or transport a program for use by or in connection with apparatuses, systems, platforms, methods, operations and/or processes discussed herein.

The terms "non-transitory computer-readable storage device" and "non-transitory machine-readable storage device" encompasses distribution media, intermediate storage media, execution memory of a computer, and any other medium or device capable of storing for later reading by a computer program implementing embodiments of a method disclosed herein. A computer program product can be deployed to be executed on one computer or on multiple computers at one site or distributed across multiple sites and interconnected by one or more communication networks.

These computer readable and executable instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable and executable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable and executable instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

In the discussion, unless otherwise stated, adjectives such as "substantially" and "about" that modify a condition or relationship characteristic of a feature or features of an embodiment of the invention, are to be understood to mean that the condition or characteristic is defined to within tolerances that are acceptable for operation of the embodiment for an application for which it is intended.

Unless otherwise specified, the terms 'about' and/or 'close' with respect to a magnitude or a numerical value may imply to be within an inclusive range of -10% to +10% of the respective magnitude or value.

It should be noted that where an embodiment refers to a condition of "above a threshold", this should not be construed as excluding an embodiment referring to a condition of "equal or above a threshold". Analogously, where an embodiment refers to a condition "below a threshold", this should not be construed as excluding an embodiment referring to a condition "equal or below a threshold". It is clear that should a condition be interpreted as being fulfilled if the value of a given parameter is above a threshold, then the same condition is considered as not being fulfilled if the value of the given parameter is equal or below the given threshold. Conversely, should a condition be interpreted as being fulfilled if the value of a given parameter is equal or above a threshold, then the same condition is considered as not being fulfilled if the value of the given parameter is below (and only below) the given threshold.

It should be understood that where the claims or specification refer to "a" or "an" element and/or feature, such reference is not to be construed as there being only one of that element. Hence, reference to "an element" or "at least one element" for instance may also encompass "one or more elements".

As used herein the term "configuring" and/or 'adapting' for an objective, or a variation thereof, implies using materials and/or components in a manner designed for and/or implemented and/or operable or operative to achieve the objective.

Unless otherwise stated or applicable, the use of the expression "and/or" between the last two members of a list of options for selection indicates that a selection of one or more of the listed options is appropriate and may be made, and may be used interchangeably with the expressions "at least one of the following", "any one of the following" or "one or more of the following", followed by a listing of the various options.

As used herein, the phrase "A,B,C, or any combination of the aforesaid" should be interpreted as meaning all of the following: (i) A or B or C or any combination of A, B, and C, (ii) at least one of A, B, and C; and (iii) A, and/or B and/or C. This concept is illustrated for three elements (i.e., A,B,C), but extends to fewer and greater numbers of elements (e.g., A, B, C, D, etc.).

It is noted that the terms "operable to" or "operative to" can encompass the meaning of the term "adapted or configured to". In other words, a machine "operable to" or "operative to" perform a task can in some embodiments, embrace a mere capability (e.g., "adapted") to perform the function and, in some other embodiments, a machine that is actually made (e.g., "configured") to perform the function.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 4, from 1 to 4, from 1 to 5, from 2 to 4, from 2 to 6, from 4 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

Discussions herein utilizing terms such as, for example, "processing", "computing", "calculating", "determining", "establishing", "analyzing", "checking", "estimating", "deriving", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes. The term "determining" and "estimating" may also refer to "heuristically determining" and "heuristically estimating", respectively. For example, a heuristic determination may approximate an exact solution.

It should be appreciated that combinations of features disclosed in different embodiments are also included within the scope of the present inventions.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A system configured to provide a user with information relating to the playing of a musical instrument, the system comprising:
a processor; and
a memory storing instructions executable by the processor to result in the execution of the following:
identifying at least one actionable engagement executed by the user with the musical instrument and a body part position associated with the at least one actionable engagement;
receiving data descriptive about at least one next actionable engagement of the user with the instrument; and
presenting an assistive symbol that is emulating an additional object virtually actionably engaging with the instrument;
wherein the additional object comprises a virtual hand accompanying the user, and/or a virtual finger that complements the playing of the user.

2. A system configured to provide a user with information relating to the playing of a musical instrument, the system comprising:
a processor; and
a memory storing instructions executable by the processor to result in the execution of the following:
identifying at least one actionable engagement executed by the user with the musical instrument associated with the at least one actionable engagement;
providing, based on the at least one actionable engagement, with respect to the body part position and/or posture of the user, feedback relating to suboptimal or erroneous execution for producing a correct sound.

3. The system of claim 2, wherein the system is configured to detect a wrong position and/or transition of the body part of the user, based on tracking of the body part by a camera.

4. The system of claim 2 or claim 3, wherein the feedback comprises presenting an assistive symbol indicative of a desirable or correct position and/or a desirable or correct transition between different body part positions.

5. The system of any one or more of the preceding claims, wherein the assistive symbol complements a detected missed user engagement with the musical instrument, or virtually accompanies the user.

6. The system of any one or more of the preceding claims, wherein the assistive symbol is displayed in overlay to body parts of the user and/or in overlay to the instrument played by the user.

7. The system of any one or more of the preceding claims 2 to 6, wherein the assistive symbol comprises one of the following: an arrow, a virtual body part, finger position sequence, finger numbering, fingering instructions, a geometric symbol, or any combination of the aforesaid.

8. The system of any one or more of the preceding claims, wherein the assistive symbol includes an animated symbol.

9. The system of any one or more of the preceding claims, comprising:
identifying operable engagement of the at least one object with the musical instrument;
determining a level of correspondence between the operable engagement of the at least one object and the received playing instructions; and
displaying at least one assistive symbol in accordance with the determined level of correspondence.

10. The system of any one or more of the preceding claims, wherein the assistive symbol is provided continuously for the entirety of the playing instructions, or only for parts of the playing instructions, for example, depending on a determined level of command of playing the musical instrument.

11. The system of any one or more of the preceding claims, wherein the assistive symbol comprises an animated arrow indicating, in overlay to the instrument, a direction of movement from a current position associated with a current action to a next position associated with a next action.

12. The system of claim 7, wherein the arrow shows, in overlay to the instrument, a magnitude of the distance to be traversed by the body part.

13. The system of claim 7, wherein the arrow shows, in overlay to the instrument, a desired orientation and/or posture of the body part relative to an instrument.

14. The system of any one or more of the preceding claims, wherein the assistive symbol comprises, in overlay to the instrument, a course or track to be traversed by the body part.
